# EUROPÄISCHE PATENTSCHRIFT

(11) **EP 3 360 405 B1**
(45) Veröffentlichungstag und Bekanntmachung des Hinweises auf die Patenterteilung: **14.04.2021**
(21) Anmeldenummer: 17000198.6
(22) Anmeldetag: 08.02.2017
(51) Int. Cl.: A01D 34/73, A01D 34/416

(54) **SCHNEIDKOPF FÜR EINE MOTORSENSE**
CUTTING HEAD FOR A MOTOR STRIMMER
TÊTE DE COUPE POUR UNE DÉBROUSSAILLEUSE

(43) Veröffentlichungstag der Anmeldung: 15.08.2018
(73) Patentinhaber: Andreas Stihl AG & Co. KG, 71336 Waiblingen (DE)
(72) Erfinder: GÜNTHER, David, 71394 Kernen (DE)
(74) Vertreter: Wasmuth, Rolf

(56) Entgegenhaltungen:
- EP-A1- 2 186 391
- DE-C1- 4 223 962
- US-A- 5 722 172
- US-A1- 2010 287 780
- US-A1- 2015 289 445

## Beschreibung

Die Erfindung betrifft einen Schneidkopf zur Montage an einem Wellenende einer Motorsense nach dem Oberbegriff des Anspruchs 1.

Aus der US 5,722,172 A ist eine Motorsense mit einem Schneidkopf bekannt, dessen mehrteiliger Grundkörper aus zwei Grundkörperteilen, nämlich einem oberen Grundkörperteil und einem unteren Grundkörperteil mit dazwischen angeordneten Schneidwerkzeugen ausgebildet ist. Zur Schraubmontage des Schneidkopfes an dem Wellenende ist in dem unteren Grundkörperteil drehfest ein Schraubelement gehalten. Die Schneidwerkzeuge sind als Schneidmesser ausgebildet und durch je ein Lagerelement in Form eines Lagerbolzens am Schneidkopf gehalten, wobei ein erstes Bolzenende des Lagerbolzens in dem einen Grundkörperteil und das andere Bolzenende in dem anderen Grundkörperteil fixiert ist. Der Lagerbolzen durchragt eine Lageraufnahme des Schneidwerkzeugs, welches um die Lagerachse des Lagerbolzens schwenkbar ist. Dreht sich das Schneidwerkzeug um eine Drehachse, werden sich die Schneidwerkzeuge aufgrund wirkender Fliehkräfte radial nach außen ausrichten und über den Umfang des Grundkörpers vorstehen.

Zur Montage oder Demontage des Schneidkopfes auf dem Wellenende der Antriebswelle muss die Antriebswelle blockiert werden. Nur bei blockierter Antriebswelle kann die Schraubverbindung zwischen dem Schraubelement und dem Wellenende gelöst oder fest angezogen werden. Hierzu wird meist ein Einsteckwerkzeug genutzt, welches in Eingriff mit der Antriebswelle, einem Getriebe oder einem drehfest mit der Antriebswelle verbundenen Element zu bringen ist, um diese zu blockieren. Eine derartige Einstecköffnung wird üblicherweise am Führungsrohr der Motorsense, einem Getriebe oder einem unterhalb des Führungsrohrs befindlichen, separat von dem Schneidkopf ausgebildeten Element, das drehfest auf der Antriebswelle sitzt, vorgehalten.

Aus der US 2010/0287780 A1 oder der EP 2 186 391 A1 ist ein Schneidkopf zur Montage auf einem Wellenende einer Motorsense bekannt, der einen geteilten Grundkörper aus einem oberen Grundkörperteil und einem unteren Grundkörperteil und zumindest ein zwischen den Grundkörperteilen angeordnetes Schneidwerkzeug aufweist. Im unteren Grundkörperteil ist drehfest ein Schraubelement zur Schraubmontage an dem Wellenende, vorgesehen, wobei der Grundkörper im Betrieb des Schneidkopfes um eine Drehachse drehend angetrieben ist. Das Schneidwerkzeug ist mit einem Lagerelement am Grundkörper gehalten. Der obere Grundkörperteil ist mit dem Wellenende drehfest verbunden, wobei im gelösten Zustand der untere Grundkörperteil gegenüber dem anderen Grundkörperteil drehbar ist

Der Erfindung liegt die Aufgabe zugrunde, einen Schneidkopf der gattungsgemäßen Art derart weiterzubilden, dass eine einfache Montage und Demontage des Schneidkopfes am Wellenende einer Antriebswelle ohne zusätzliche Bauteile oder die Verwendung von Werkzeug möglich ist.

Die Aufgabe wird nach den Merkmalen des Anspruchs 1 gelöst.

Nach der Erfindung wird der obere Grundkörperteil mit dem Wellenende drehfest verbunden. Dadurch ist ohne Verwendung von Werkzeug ein Blockieren der Antriebswelle durch Festhalten des oberen Grundkörperteils durch den Benutzer möglich. Das untere Grundkörperteil ist drehfest mit einem Schraubelement verbunden, über das das untere Grundkörperteil auf einen Gewindeabschnitt des Wellenendes aufgeschraubt werden kann, bis die Grundkörperteile bei an dem Wellenende montiertem Gehäusekopf an einer Kontaktfläche aneinander anliegen, die zwischen dem oberen Grundkörperteil und dem unteren Grundkörperteil ausgebildet ist. Die Kontaktfläche der montierten Grundkörperteile liegt radial näher an dem Wellenende als ein Lagerbolzen eines Schneidwerkzeugs.

Das Lagerelement wird an nur einem der beiden Grundkörperteile vorgesehen und festgelegt, so dass der auf dem Wellenende montierte untere Grundkörperteil des Schneidkopfes relativ zum oberen Grundkörperteil drehbar ist. Durch die Schraubmontage des unteren Grundkörperteils auf das Wellenende wird der obere Grundkörperteil axial an einem Drehmitnehmer der Antriebswelle gesichert. Zur Demontage des Schneidkopfes werden die Grundkörperteile gegeneinander verdreht, wobei der Benutzer durch Blockieren des oberen Grundkörperteils ein Mitdrehen der Antriebswelle unterbinden kann. Es kann grundsätzlich auf zusätzliche Elemente und/oder Werkzeuge verzichtet werden, welche vorteilhaft zum Blockieren der Antriebswelle und Lösen des unteren Grundkörperteils mit dem Schraubelement eingesetzt werden können. Es muss nicht zwingend ein Werkzeug mitgeführt werden, wodurch das Gewicht für den Benutzer verringert ist.

Im Betrieb des Schneidwerkzeugs wirken bei Drehung des Grundkörpers um die Drehachse auf die Schneidwerkzeuge Fliehkräfte, weshalb sich aufgrund der wirkenden Fliehkräfte die Schneidwerkzeuge radial nach außen ausrichten und im Betrieb des Schneidkopfes über den Umfang des Grundkörpers vorstehen.

Nach einer Ausgestaltung der Erfindung ist das Lagerelement in dem unteren Grundkörperteil vorgesehen. Dabei kann das Lagerelement mit einem axialen Abstand zu einer axial benachbarten Innenfläche des oberen Grundkörperteils liegen. Weist der obere Grundkörperteil vorteilhaft einen radial außerhalb des Lagerbolzens liegenden Außenrand auf, der axial über die Innenfläche des oberen Grundkörperteils vorsteht, kann eine Axialsicherung eines an dem Lagerelement gehaltenen Schneidwerkzeugs gegeben sein. Hierzu kann insbesondere vorgesehen sein, dass der axiale Abstand des Lagerelementes zur Innenfläche des oberen Grundkörperteils kleiner ist als die axiale Höhe des Außenrandes des oberen Grundkörperteils.

In besonderer Weiterbildung der Erfindung ist vorgesehen, dass der Schraubweg des unteren Grundkörperteils relativ zum oberen Grundkörperteil durch einen zwischen den Grundkörperteilen liegenden Schraubanschlag begrenzt ist. Vorteilhaft ist der Schraubanschlag an einer Nabe des oberen Grundkörperteils ausgebildet; insbesondere ist der Schraubanschlag durch eine axiale Ringfläche der Nabe gebildet.

In Weiterbildung der Erfindung umfasst der Schraubanschlag ein zwischen dem oberen Grundkörperteil und dem unteren Grundkörperteil angeordnetes Einlegeteil, welches insbesondere als Ringscheibe ausgebildet ist. Das Einlegeteil besteht vorzugsweise aus einem anderen Material als die Grundkörperteile selbst, z. B. aus Metall. Die Grundkörperteile selbst sind vorzugsweise aus Kunststoff, insbesondere aus schlagfestem Kunststoff gefertigt.

Mit dem Einlegeteil wird vermieden, dass das obere Grundkörperteil und das untere Grundkörperteil im Bereich der Kontaktfläche miteinander verschweißen. Das Einlegeteil stellt sicher, dass auch nach mehrmaligem Bodenkontakt des Schneidkopfes und einem eventuellen weiteren Anziehen des Schraubelementes das untere Grundkörperteil für den Benutzer meist ohne Werkzeug lösbar bleibt.

Dem Schraubanschlag ist eine Stirnseite eines in dem unteren Grundkörperteil ausgebildeten Distanzelementes zugeordnet. Dabei bildet der Schraubanschlag eine radial äußerste Kontaktfläche zwischen dem unteren Grundkörperteil und dem oberen Grundkörperteil.

Um einen einfachen Zusammenbau der Grundkörperteile des Schneidkopfes zu gewährleisten, ist vorgesehen, dass das eine Grundkörperteil einen zentralen Zentrieransatz aufweist, der in eine Zentrieraufnahme des anderen Grundkörperteils eingreift. Vorzugsweise ist der Zentrieransatz an dem unteren Grundkörperteil ausgebildet, während die Zentrieraufnahme an dem oberen Grundkörperteil vorgesehen ist.

In zweckmäßiger Weiterbildung steht der Zentrieransatz über die Stirnseite des Distanzelementes vor.

Das in dem unteren Grundkörperteil vorgesehene Schraubelement zur Montage des Schneidkopfes auf dem Wellenende ist insbesondere als Schraubmutter ausgebildet, die verliersicher und drehfest im Material des unteren Grundkörperteils gehalten ist.

Das Lagerelement ist vorteilhaft als Lagerbolzen oder als Lagerhülse mit einer Lagerachse ausgebildet, wobei das Schneidwerkzeug im Betrieb um die Lagerachse schwenken kann. Das Schneidwerkzeug, welches insbesondere als Schneidmesser ausgeführt ist, kann sich unter der Wirkung der durch Rotation des Schneidkopfes auftretenden Fliehkräfte in radialer Richtung ausrichten und steht über den Umfang des Schneidkopfes vor.

Ein als Lagerelement vorgesehener Lagerbolzen weist ein erstes Bolzenende und ein zweites Bolzenende auf, wobei das erste Bolzenende in dem unteren Grundkörperteil gehalten ist und das zweite Bolzenende des Lagerbolzens mit einem axialen Abstand zu einer axial benachbarten Innenfläche des oberen Grundkörperteils liegt.

Das an einem Lagerelement gehaltene und vorteilhaft als Schneidmesser ausgebildete Schneidwerkzeug definiert mit seinem freien Ende einen Schnittkreis, dessen Radius mindestens das 3-fache, insbesondere mindestens das 3,5-fache des Radius des Grundkörpers des Schneidkopfes beträgt.

Das summierte Gewicht der an einem Grundkörperteil befestigten Schneidwerkzeuge beträgt mindestens 30% bis 40% des Gewichts des Grundkörperteils, an dem das Schneidwerkzeug festgelegt ist. Der Schneidkopf erfährt mit zunehmendem Schnittkreis und Gewicht der Schneidwerkzeuge eine stärkere mechanische Belastung der Lagerelemente und der Kontaktstelle zwischen oberem und unterem Grundkörperteil.

Weitere Merkmale der Erfindung ergeben sich aus den weiteren Ansprüchen, der Beschreibung und der Zeichnung, in der ein nachfolgend im Einzelnen beschriebenes Ausführungsbeispiel der Erfindung dargestellt ist. Es zeigen:
- Fig. 1: eine schematische Seitenansicht auf eine Motorsense,
- Fig. 2: in schematischer, perspektivischer Darstellung einen Schneidkopf auf ein Wellenende einer Motorsense,
- Fig. 3: eine Seitenansicht des Schneidkopfes nach Fig. 2,
- Fig. 4: einen Axialschnitt durch den montierten Schneidkopf nach Fig. 3,
- Fig. 5: eine Seitenansicht auf ein unteres Grundkörperteil mit als Lagerbolzen oder Lagerhülse ausgebildeten Lagerelementen,
- Fig. 6: eine perspektivische Ansicht auf das untere Grundkörperteil mit montierten Lagerelementen,
- Fig. 7: einen Schnitt durch das untere Grundkörperteil mit darin festgelegten Lagerelementen,
- Fig. 8: eine Ansicht auf das obere Grundkörperteil,
- Fig. 9: eine perspektivische Ansicht auf das obere Grundkörperteil nach Fig. 8,
- Fig. 10: einen Schnitt durch das obere Grundkörperteil nach Fig. 8.

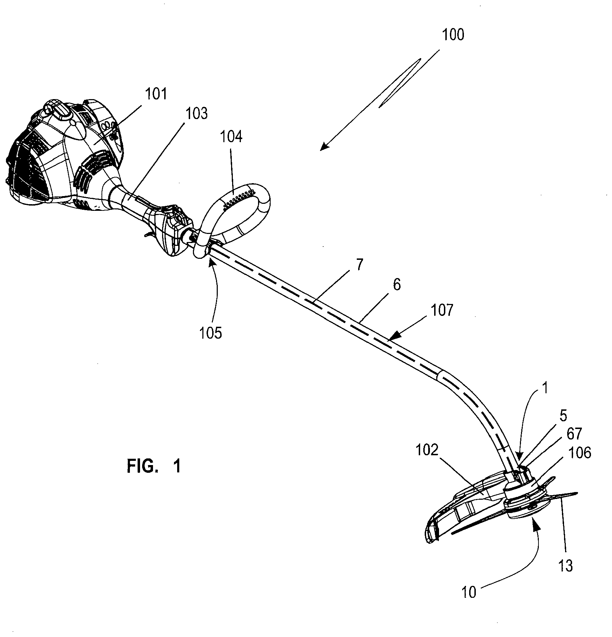

In Fig. 1 ist ein Arbeitsgerät 100 von der Bauart einer Motorsense in Seitenansicht dargestellt. Ein Schneidkopf 10 ist an einem ersten, unteren Ende 5 eines Führungsrohres 6 vorgesehen, an dessen zweitem, oberen Ende 105 ein Antriebsmotor 101 gehalten ist. Der Antriebsmotor 101 treibt eine Verbindungswelle 107 an, die vorteilhaft als flexible Welle 7 ausgebildet ist und der Krümmung des Führungsrohres 6 folgt. Im Bereich des oberen Endabschnittes des Führungsrohres 6 ist ein Bediengriff 103 vorgesehen, der von dem Führungsrohr 6 durchragt wird. Dem Bediengriff 103 benachbart ist ein am Führungsrohr 6 befestigter Rundgriff 104 montiert.

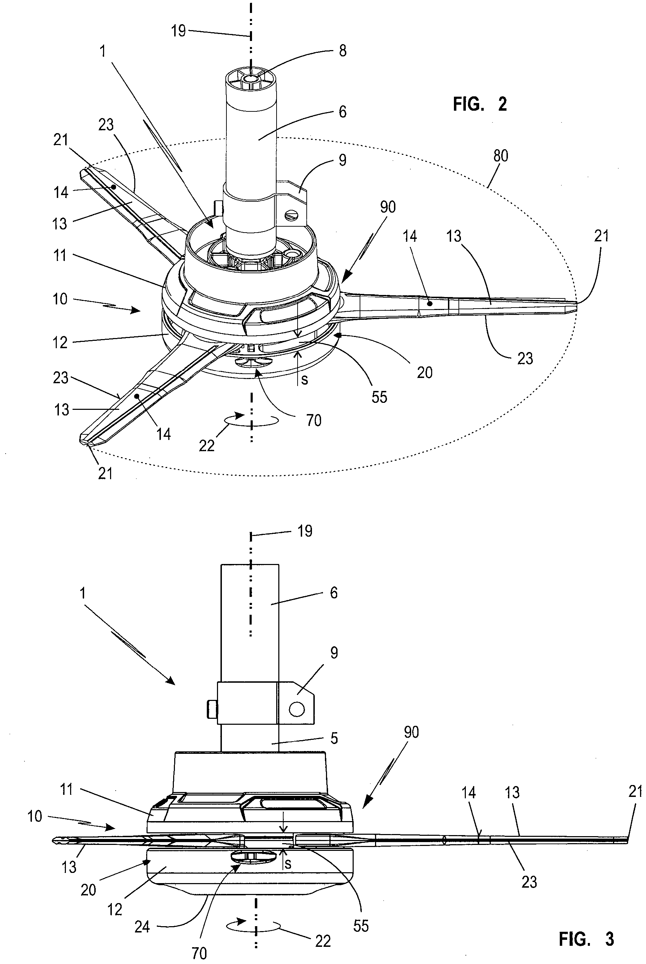

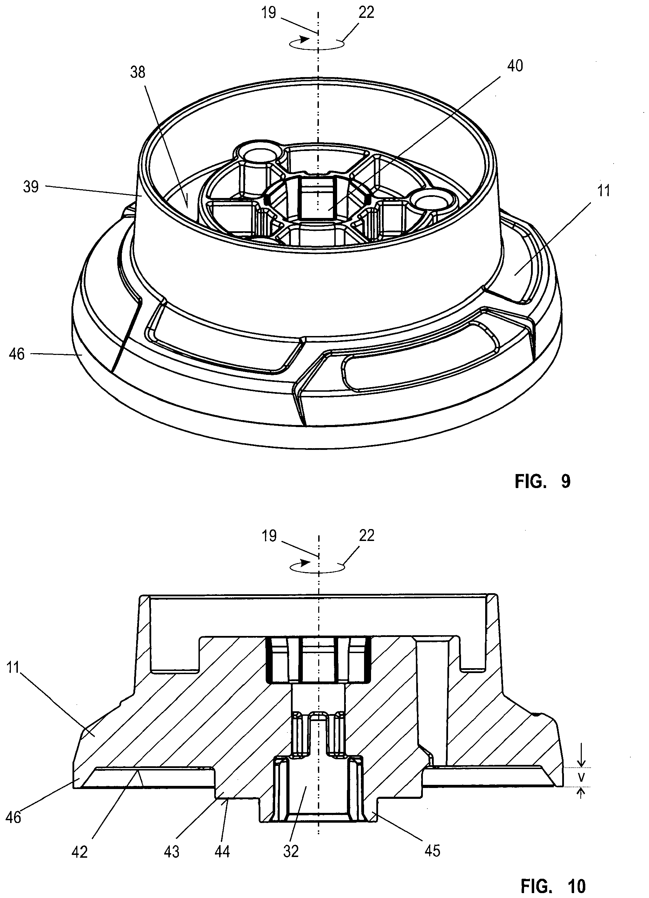

Durch die Krümmung des Führungsrohres 6 ist die Arbeitslage des Schneidkopfes 10 relativ zum Boden bestimmt, ohne dass ein Winkelgetriebe notwendig ist. Der in den weiteren Fig. 2 bis 9 beschriebene Schneidkopf 10 ist insbesondere für ein Arbeitsgerät 100 ohne Winkelgetriebe am Ende des Führungsrohres 6 vorgesehen. Der Schneidkopf 10 ist zweckmäßig möglichst nah an dem Ende 5 des Führungsrohres 6 angeordnet und vorteilhaft mit einem Wickelschutz 106 versehen, so dass ein Einwickeln von Gras in den Antriebsstrang vermieden ist.

In den Figuren 2 bis 4 ist das werkzeugseitige Ende 1 einer Motorsense dargestellt. Das werkzeugseitige Ende 1 trägt einen Schneidkopf 10, der an einem Wellenende 2 einer Antriebswelle 3 montiert ist. Die Antriebswelle 3 ist in einem Lager 4 gehalten, welches in das Ende 5 eines Führungsrohres 6 eingeschoben ist. Im Führungsrohr 6 läuft eine flexible Welle 7, die einen am anderen Ende 105 des Führungsrohres 6 angeordneten Antriebsmotor 101 (Fig. 1) mit der Antriebswelle 3 verbindet. Die flexible Welle 7 ist innerhalb des Führungsrohres 6 durch eine Lagerhülse 8 geführt und gelagert.

An dem unteren Ende des Führungsrohres 6 ist ferner ein Flansch 9 vorgesehen, der zur Montage eines nicht näher dargestellten Schnittschutzes vorgesehen ist.

Der Schneidkopf 10 umfasst allgemein einen geteilten Grundkörper 90. Der Grundkörper 90 ist insbesondere zweigeteilt und besteht im Ausführungsbeispiel aus einem oberen Grundkörperteil 11 und einer unteren Grundkörperteil 12. Im Ausführungsbeispiel kann das obere Grundkörperteil 11 im weiteren Sinne auch als obere Grundkörperhälfte und das untere Grundkörperteil 12 im weiteren Sinne als untere Grundkörperhälfte bezeichnet werden. Der Grundkörper 90 kann grundsätzlich auch aus mehr als zwei Grundkörperteilen bestehen.

Jedes Grundkörperteil 11, 12 besteht vorteilhaft aus weniger als drei Grundelementen; insbesondere besteht zumindest eines der beiden Grundkörperteile 11, 12 aus nur einem einzigen Bauteil. Der Grundkörper 90 bildet zusammen mit weiteren Zusatzelementen wie Lagerbolzen, Lagerhülsen, Schneidwerkzeuge, Schraubelement oder dgl. den Schneidkopf 10. Der Grundkörper 90, zumindest ein Grundkörperteil 12, dient als Träger für mindestens ein Schneidwerkzeug 13, welches im Ausführungsbeispiel als Messer 14, insbesondere als Kunststoffmesser oder als Schneidfaden 74 ausgebildet ist.

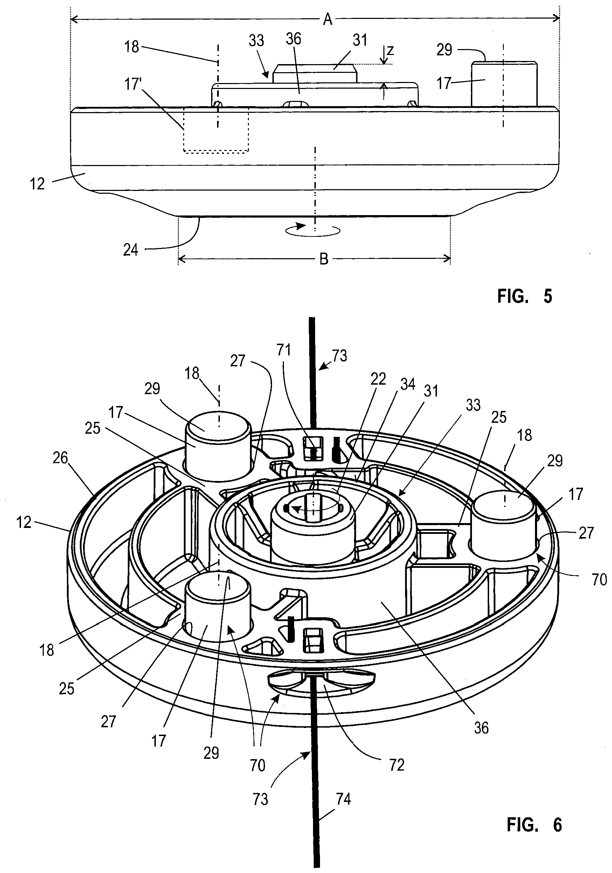

Im Ausführungsbeispiel hat jedes Messer 14 an einem ersten Ende 15 eine Lagerbohrung 16, in die ein als Lagerbolzen 17 ausgebildetes Lagerelement 70 des Schneidkopfes 10 eingreift. Die Lagerelemente 70 können vorteilhaft einteilig mit dem Grundkörperteil ausgebildet sein. Das Messer 14 ist um die Lagerachse 18 des Lagerbolzens 17 schwenkbar. In einer anderen Ausführungsform kann vorgesehen sein, dass das Messer 14 an seinem Ende 15 einen Lagerzapfen aufweist, der in eine Zapfenbohrung oder eine Lagerhülse 17' (Fig. 5) eingreift. Bei einer Rotation des Grundkörpers 90 um die Drehachse 19 des Schneidkopfes 10 werden sich die Messer 14 durch die auf sie wirkenden Fliehkräfte radial nach außen ausrichten, wie dies in Fig. 2 dargestellt ist.

Die im Betrieb des Schneidkopfes 10 über einen Umfang 20 des Schneidkopfes 10 vorstehenden Messer 14 verjüngen sich zu ihren freien Enden 21, wobei die in Drehrichtung 22 vorlaufende Längskante 23 eines Messers 14 als Schneide ausgebildet ist.

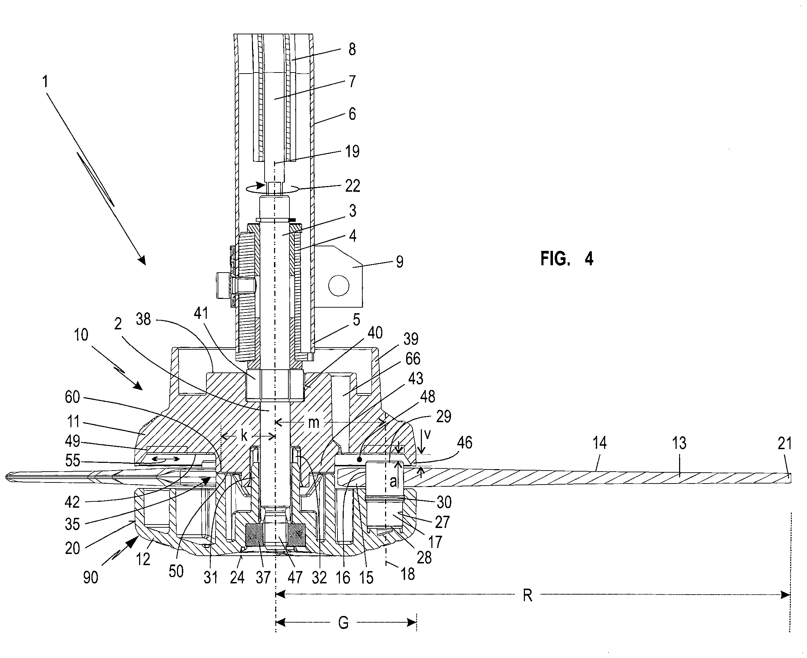

Ein an einem Lagerelement 70 gehaltenes und als Messer 14 ausgebildetes Schneidwerkzeug 13 definiert mit seinem freien Ende 21 einen Flugkreis, der einen Schnittkreis 80 definiert. Der Radius R des Schnittkreises 80 beträgt mindestens das 3-fache bis 3,5 fache des maximalen Radius G des Grundkörpers 90 des Schneidkopfes 1 (Fig. 4). Insbesondere liegen alle freien Enden 21 der Messer 14 auf einem gemeinsamen Flugkreis, der den Schnittkreis 80 bildet.

Der Radius des Grundkörpers 90 beträgt insbesondere 40 mm bis 70 mm und der Radius des Schnittkreises 80 mindestens 120 mm, insbesondere mehr als 160 mm.

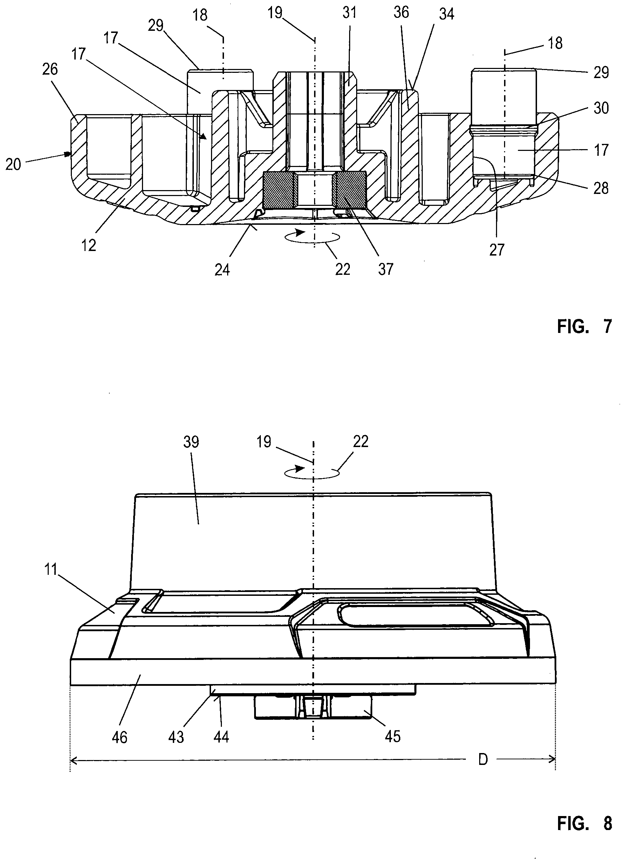

Das untere Grundkörperteil 12 ist in den Figuren 5 bis 7 wiedergegeben. Es hat eine in Seitenansicht nach Fig. 5 bzw. im Querschnitt nach Fig. 7 tellerartige Außenform, wobei sich ein Boden 24 des unteren Grundkörperteils 12 von einem maximalen Außendurchmesser A auf einen reduzierten Bodendurchmesser B verringert.

Wie insbesondere die perspektivische Darstellung nach Fig. 6 zeigt, sind in dem unteren Grundkörperteil 12 drei als Lagerbolzen 17 ausgebildete Lagerelemente 70 gehalten. Hierzu weist das untere Grundkörperteil Rippen 25 auf, die sich radial von der Drehachse 19 bis zu einem Außenrand 26 erstrecken. Nahe dem Außenrand 26 sind in dem unteren Grundkörperteil 12 Aufnahmebohrungen 27 zum Einsetzen eines Bolzenendes 28 (Fig. 6) des Lagerbolzens 17 ausgebildet. Die Lagerbolzen 17 können auch einteilig mit dem Grundkörperteil 12 ausgebildet sein.

Ein Lagerbolzen 17 weist zwischen seinen Bolzenenden 28 und 29 einen Fixierwulst 30 auf, der sich in die Umfangswand der Aufnahmebohrung 27 des unteren Grundkörperteils 12 einpresst. Der Lagerbolzen 17 wird mit einem Bolzenende 28 voran in die Aufnahmebohrung 27 eingesetzt, bis der Fixierwulst 30 innerhalb der Aufnahmebohrung 27 liegt und das als Lagerbolzen 17 ausgebildete Lagerelement 70 axial fest in dem unteren Grundkörperteil 12 festlegt. Die Ausrichtung des Lagerbolzens 17 mit seiner Lagerachse 18 ist derart, dass die Lagerachse 18 parallel zur Drehachse 19 des unteren Grundkörperteils 12 liegt. Die Drehachse 19 des Grundkörpers 90 des Schneidkopfes 10 bildet zugleich eine Hochachse des unteren Grundkörperteils 12.

Das untere Grundkörperteil 12 weist ferner einen zur Drehachse 19 rotationssymmetrischen Zentrieransatz 31 auf, dem in dem oberen Grundkörperteil 11 eine zentrale Zentrieraufnahme 32 zugeordnet ist.

An dem unteren Grundkörperteil 12 ist ferner ein Distanzelement 33 ausgebildet, dessen Stirnseite 34 mit dem Schraubanschlag 35 des oberen Grundkörperteils 11 zusammenwirkt, wie Fig. 4 zeigt. Ein auf das eine Grundkörperteil 11 bzw. 12 wirkendes Moment wird an der Kontaktfläche 60 (Fig. 4) gegen das andere Grundkörperteil 12, 11 abgestützt. Je größer der Schnittkreis 80 und je schwerer das Schneidwerkzeug 13 ist, umso größer ist die Belastung an der Kontaktfläche 60. Je näher die Kontaktfläche 60 an der Drehachse 19 liegt, umso größer sind aufgrund der Hebelverhältnisse die zwischen den Grundkörperteilen 11, 12 wirkenden Abstützkräfte. Da das Distanzelement 33 radial innerhalb der Lagerelemente 70 angeordnet ist, ist eine größere Abstützkraft erforderlich, als bei einer Konstruktion gemäß dem Stand der Technik, bei dem die Abstützung radial weiter außen liegt.

Das Distanzelement 33 ist in Form einer Distanzhülse 36 vorgesehen, die einteilig mit dem unteren Grundkörperteil 12 ausgebildet ist und den Zentrieransatz 31 koaxial umgibt. Der Zentrieransatz 31 steht über die Stirnseite 34 des Distanzelementes 33 um einen axialen Überstand z (Fig. 5) vor.

Im Zentrum des Bodens 24 des unteren Grundkörperteils 12 ist vorzugsweise ein als Schraubmutter ausgebildetes Schraubelement 37 gehalten. Das Schraubelement 37 liegt gleichachsig zur Drehachse 19 und ist im Material des unteren Grundkörperteils 12 unverlierbar gehalten. Das Schraubelement 37 ist in Umfangsrichtung drehfest mit dem unteren Grundkörperteil 12 verbunden.

Die Figuren 8 bis 10 geben das obere Grundkörperteil 11 wieder, das - ebenso wie das untere Grundkörperteil 12 - als Rotationskörper ausgebildet ist.

Die dem Führungsrohr 6 zugewandte Stirnseite 38 des oberen Grundkörperteils 11 weist einen erhöhten Umfangsrand 39 auf, der das freie Ende 5 des Führungsrohrs 6 übergreift (Fig. 4) und frei liegende Teile des Antriebsstranges verdeckt. Der als Kragen wirkende Umfangsrand 39 bildet einen Wickelschutz 106 (Fig. 1), der ein Einwickeln von Gras o.ä. in den Antriebsstrang weitgehend unterbindet. Die Stirnseite 38 weist ferner eine zentrale Aufnahmekontur 40 auf. In die Aufnahmekontur 40 greift ein Drehmitnehmer 41 der Antriebswelle 3 ein. Mit Eingriff des Drehmitnehmers 41 - wie in Fig. 3 gezeigt - ist das obere Grundkörperteil 11 drehfest mit dem Wellenende 2 der Antriebswelle 3 verbunden.

Es kann zweckmäßig sein, dass ein Teil der im Betrieb wirkenden Kräfte über die Umfangsflächen des Drehmitnehmers 41 und der Aufnahmekontur 40 übertragen werden. Vorteilhaft ist etwas Spiel zwischen den Umfangsflächen vorgesehen, so dass der Drehmitnehmer 41 primär zum Blockieren der Antriebswelle 3 bei Stillstand der Antriebswelle 3 dient, um beispielsweise das untere Grundkörperteil 12 zusammen mit dem Schraubelement 37 von der Antriebswelle 3 zu lösen. Der Kraftfluss zwischen Antriebswelle 3 und dem oberen Grundkörperteil 11 erfolgt im Ausführungsbeispiel über die einander zugewandten Stirnseiten von Drehmitnehmer 33 und Nabe 43, die durch Anziehen des Schraubelementes 37 gegeneinander verspannt und damit wirkverbunden werden.

Der maximale Außendurchmesser D des oberen Grundkörperteils 11 entspricht dem maximalen Außendurchmesser A des unteren Grundkörperteils 12. Die Grundkörperteile liegen einander mit ihrem maximalen Außendurchmesser A und D zugewandt.

Das obere Grundkörperteil 11 weist auf seiner dem unteren Grundkörperteil 12 zugewandten Innenfläche 42 eine erhöhte Nabe 43 auf. Die Nabe 43 bildet eine Ringfläche 44, welche koaxial zur Drehachse 19 des Schneidkopfes 10 liegt. Die Nabe 43 umgibt die Zentrieraufnahme 32, deren Rand 45 axial über die Ringfläche 44 der Nabe 43 vorsteht. Die erhöhte Nabe 43 und das Distanzelement 33 enden auf einem gemeinsamen Durchmesserkreis. Dieser Durchmesserkreis liegt radial innerhalb der Lagerelemente 70 und radial außerhalb der Zentrieraufnahme 32.

Die Innenfläche 42 weist einen erhabenen Außenrand 46 auf, der sich um eine Höhe v zur Innenfläche 42 erhebt.

Wie Fig. 4 zeigt, erfolgt die Montage des Schneidkopfes 10 derart, dass das obere Grundkörperteil 11 mit dem Wellenende 2 drehfest verbunden ist. Der Drehmitnehmer 41 der Antriebswelle 3 greift in die Aufnahmekontur 40 des oberen Grundkörperteils 11 ein. Das Schraubelement 37 ist in dem unteren Grundkörperteil 12 drehfest angeordnet. Ein Verdrehen der Grundkörperteile 11, 12 zueinander bewirkt ein Lösen bzw. Festlegen des Schneidkopfes 10 an der Antriebswelle 3. Durch das Festhalten des oberen Grundkörperteils 11 durch den Benutzer wird die Antriebswelle 3 blockiert, so dass das Schraubelement 37 zusammen mit dem unteren Grundkörperteil 12 relativ zur Antriebswelle 3 gedreht werden kann. Um eine Relativdrehung der Grundkörperteile 11, 12 zu ermöglichen, ist das Lagerelement 70 für das Schneidwerkzeug 13, 73 in nur einer der beiden Grundkörperteile 11, 12 festgelegt und kann sich gegenüber dem anderen Grundkörperteil 12, 11 drehen.

Im Ausführungsbeispiel ist das Lagerelement 70 in dem gleichen Grundkörperteil 12 festgelegt wie auch das Schraubelement 37. Die Lagerelemente 70 sind in dem gegenüber der Antriebswelle 3 drehbaren Grundkörperteil 12 angeordnet. Ein Trägheitsmoment eines Schneidwerkzeuges 13, 73 wird auf das drehbare Grundkörperteil 12 übertragen und kann ein selbsttätiges Nachziehen des Schraubelementes 73 bewirken. Es kann zweckmäßig sein, die Lagerelemente 70 in dem oberen, drehfest angeordneten Grundkörperteil 11 festzulegen, so dass das Trägheitsmoment des Schneidwerkzeuges 13, 73 keinen Einfluss auf das Schraubelement 37 ausübt.

Im Ausführungsbeispiel ist der ein Lagerelement 70 bildende Lagerbolzen 17 an nur einem Bolzenende 28, nämlich einem unteren Bolzenende, in dem unteren Grundkörperteil 12 festgelegt. Es kann zweckmäßig sein, alternativ den ein Lagerelement 70 bildenden Lagerbolzen 17 mit nur einem Bolzenende in dem oberen Grundkörperteil 11 festzulegen. Die als Messer 14 ausgebildeten Schneidwerkzeuge 13 des Schneidkopfes 10 werden mit ihren Lagerbohrungen 16 auf die freien Bolzenenden 29 der Lagerbolzen 17 aufgefädelt.

Im Ausführungsbeispiel ist vorgesehen, dass sich die Schneidwerkzeuge 13 des Schneidkopfes 10 ausschließlich montieren bzw. demontieren lassen, wenn sich an der Kontaktfläche 60 (Fig. 4) zwischen dem Distanzelement 33 und der Nabe 43 der beiden Grundkörperteile 11, 12 ein ausreichender Spalt einstellt, d. h. das untere Grundkörperteil 12 in ausreichendem Maße gelockert oder ganz abgenommen ist.

Es kann zweckmäßig sein, die als Messer 14 ausgebildeten Schneidwerkzeuge 13 an ihren Enden 15 mit einer Art Clips-Verbindung auszuführen, so dass eine Montage bzw. Demontage der Messer 14 ohne Lockerung des unteren Grundkörperteils 12 durch radiales Aufstecken des Endes 15 auf den Lagerbolzen 17 oder Abziehen des Endes 15 vom Lagerbolzen 17 möglich ist.

Zur Ausrichtung des unteren Grundkörperteils 12 zum oberen Grundkörperteil 11 greift der vorzugsweise zylinderförmig ausgebildete Zentrieransatz 31 des unteren Grundkörperteils 12 in die Zentrieraufnahme 32 des oberen Grundkörperteils 11 ein. Dabei ist die Auslegung so getroffen, dass das freie Ende des Zentrieransatzes 31 vom Rand 45 der Zentrieraufnahme 32 aufgenommen ist, bevor das Gewindeende 47 in das Gewinde des Schraubelementes 37 eingreift.

Der untere Grundkörperteil 12 wird - vorzugsweise entgegen der Drehrichtung 22 - auf das Wellenende 2 aufgeschraubt bis die Aufnahmekontur 40 des oberen Grundkörperteils 11 an dem Drehmitnehmer 41 und die Stirnseite 34 des Distanzelementes 33 an der Ringfläche 44 der Nabe 43 anschlägt. Die Ringfläche 44 der Nabe 43 und die Stirnseite 34 des Distanzelementes 33 bilden einen Schraubanschlag 35, wie Fig. 4 zeigt. Das untere Grundkörperteil 12 wird fest gegen den Schraubanschlag 35 aufgeschraubt, so dass im Betrieb des Schneidkopfes 10 grundsätzlich keine Verdrehung der Grundkörperteile 11 und 12 gegeneinander auftritt.

Liegen die Grundkörperteile 11 und 12 an dem Schraubanschlag 35 fest aneinander an, ist zwischen den Grundkörperteilen 11 und 12 ein umlaufender Ringspalt 55 (Fig. 1, 2) ausgebildet, der eine axiale Höhe s aufweist. Durch den Ringspalt 55 ragen die Schneidwerkzeuge 13 nach außen und stehen über den Umfang 20 des Schneidkopfes 10 vor.

Es kann zweckmäßig sein, dass die axiale Höhe s des Ringspaltes 55 über den Umfang des Grundkörpers 90 unterschiedlich ausgebildet ist. So können in Umfangsrichtung des Grundkörpers 90 insbesondere Bereiche zwischen den Messern 14 vorgesehen sein, in denen der Ringspalt 55 in der Höhe s stark verringert ist, zweckmäßig in diesen Bereichen der Ringspalt geschlossen ist, also kein Spalt ausgebildet ist. Die Umfangslänge der geschlossenen Bereiche ist vorteilhaft derart gewählt, dass eine Schwenkbewegung der Messer 14 erhalten bleibt, also durch die geschlossenen Bereiche nicht behindert ist. Eine Verschmutzung des Innenraums 48 des Schneidkopfes 10 kann durch den in der Höhe s verringerten bzw. teilweise geschlossenen Ringspalt 55 reduziert werden.

Aufgrund der Fixierung der Lagerelemente 70 an nur einem Grundkörperteil kann der untere Grundkörperteil 12 relativ zum oberen Grundkörperteil 11 gedreht werden, was einerseits eine einfache Montage des Schneidkopfes 10 am Wellenende 2 ermöglicht und andererseits möglich macht, dass die Lagerelemente 70 frei von Reaktionsmomenten zwischen den Grundkörperteilen 11, 12 bleiben.

Liegen das obere und das untere Grundkörperteil 11, 12 durch Anziehen des Schraubelementes 37 an der Kontaktfläche 60 fest aneinander an, ist grundsätzlich kein weiteres Festschrauben der Grundkörperteile 11, 12 gegeneinander mehr möglich. Lediglich zu Beginn des Betriebs mit einem Schneidkopf 10 kann in Sonderfällen ein durch Trägheit bedingtes weiteres Nachziehen des Schraubelements 37 auftreten.

Wie Fig. 4 ferner zeigt, ist zwischen dem oberen Grundkörperteil 11 und dem unteren Grundkörperteil 12 durch den Schraubanschlag 35 die Kontaktfläche 60 ausgebildet, an der die montierten Grundkörperteile 11 und 12 aneinander anliegen. Die Lage der Kontaktfläche 60 ist dabei so gewählt, dass die Kontaktfläche 60 des Schraubanschlags 35 radial näher am Wellenende 2 liegt als das vorzugsweise als Lagerbolzen 17 ausgebildete Lagerelement 70. Wie Fig. 4 zeigt, liegt die Kontaktfläche 60 des Schraubanschlags 35 mit einem radialen Abstand k zur Drehachse 19 des Schneidkopfes 10. Die Lagerachse 18 des als Lagerbolzen 17 ausgebildeten Lagerelements 70 liegt mit einem Abstand m zur Drehachse 19 des Schneidkopfes 10. Der Abstand m ist insbesondere mehrfach größer als der Abstand k; im Ausführungsbeispiel ist der Abstand m zwei- bis dreimal größer als der Abstand k. Die Messer 14 können bei Kontakt mit dem Boden oder einem Hindernis ausweichen und weit einklappen, wodurch die Messer 14 und/oder das Hindernis gegen Beschädigung geschützt wird.

Wie in Fig. 4 angedeutet, ist auf der Ringfläche 44 der Nabe 43 ein Einlegeteil 50 angeordnet, welches bevorzugt als Ringscheibe, insbesondere als Gleitscheibe ausgebildet ist. Das Einlegeteil 50 besteht vorzugsweise aus Metall und wirkt zwischen der Ringfläche 44 der Nabe 43 einerseits und der Stirnseite 34 der Distanzelementes 33 andererseits. Bevorzugt besteht das Einlegeteil 50 aus einem anderen Material als die Grundkörperteile 11, 12, die insbesondere aus Kunststoff, vorzugsweise einem schlagfesten Kunststoff bestehen.

In der montierten Lage gemäß Fig. 4 hat das axiale, obere Bolzenende 29 des als Lagerbolzen 17 ausgebildeten Lagerelementes 70 zur Innenfläche 42 des oberen Grundkörperteils 11 einen Abstand a. Der radial außerhalb des Lagerelementes 70 liegende Außenrand 46 des oberen Grundkörperteils 11 hat eine Höhe v, die größer als der Abstand a des Bolzenendes 29 zur Innenfläche 42 des oberen Grundkörperteils 11 ist. Dadurch ragt das als Lagerbolzen 17 ausgebildete Lagerelement 70 mit seinem Bolzenende 29 in den vom Außenrand 46 begrenzten Innenraum 48 ein; die axiale Lage des vorzugsweise als Messer 14 ausgebildeten Schneidwerkzeugs 13 auf dem freien Bolzenende 29 des Lagerbolzens 17 ist konstruktiv gesichert. Das axiale Bolzenende 29 des Lagerbolzens 17 ist radial wie in Umfangsrichtung des Grundkörpers 90 vom oberen Grundkörperteil 11 frei.

Insbesondere kann vorgesehen sein, dass das dem oberen Grundkörperteil 11 zugewandt liegende Bolzenende 29 des als Lagerbolzen 17 ausgebildeten Lagerelementes 70 in eine Ringnut 49 des oberen Grundkörperteils 11 einragt. Die Ringnut 49 ist in Fig. 4 links strichliert angedeutet und in der zugewandten Innenfläche 42 des oberen Grundkörperteils 12 koaxial zur Drehachse 19 ausgebildet. Die Ringnut erstreckt sich über 360° Umfangswinkel. In der Ringnut 49 kann das Lagerelement 70 in radialer Richtung entsprechend dem Doppelpfeil 88 an den Nutwänden der Ringnut 49 abgestützt sein, während das Lagerelement 70 in Umfangsrichtung des Grundkörpers 90 nicht abgestützt ist und relativ zum oberen Grundkörperteil 11 in der Ringnut 49 frei verschoben werden kann. Das Lagerelement 70 ist in Umfangsrichtung des Grundkörpers 90 gegenüber dem oberen Grundkörperteil 11 frei, so dass das auf dem Wellenende 2 montierte untere Grundkörperteil 12 relativ zum oberen Grundkörperteil 11 frei drehbar ist. Treten auf das Lagerelement 70 Kippmomente auf, können diese über die Nutwände der Ringnut 49 dennoch abgestützt werden.

Wie die Fig. 6 zeigt, können anstelle von Messern 14 als Schneidwerkzeuge 13 auch ein oder mehrere Schneidfäden 74 als Schneidwerkzeuge 73 vorgesehen sein. Im Ausführungsbeispiel ist im Umfang 20 des unteren Grundkörperteils 12 ein Lagerelement 70 für einen Schneidfaden 74 vorgesehen. Es besteht aus einer Fadenöffnung 72 mit einer in der Fadenöffnung 72 ausgebildeten Klemmanordnung 72 für ein Ende des Schneidfadens 74. Der Schneidfaden 74 wird in der Klemmanordnung 72 gehalten, so dass bei einer Rotation des Schneidkopfes 10 in Drehrichtung 22 die wirkende Fliehkraft zu einer etwa radialen Ausrichtung der Schneidfäden 74 führt. Die vorstehend zu Messern 14 gemachten Ausführungen gelten entsprechend für Schneidfäden 74.

Vorteilhaft weist der Schneidkopf 10, insbesondere das obere Grundkörperteil 11, eine Einstecköffnung 66 (Fig. 4) auf und der Werkzeugschutz 102 eine zugeordnete Öffnung 67 (Fig. 1) auf. Sofern der Benutzer bei Drehung des unteren Grundkörperteils 12 das obere Grundkörperteil 11 nicht sicher gegenhalten kann, wird ergänzend ein Stift durch die Öffnung 67 im Werkzeugschutz 102 in die Einstecköffnung 66 in dem oberen Grundkörperteil 11 gesteckt. Auf diese Weise stützt sich das beim Lösen des unteren Grundkörperteils 12 auf das obere Grundkörperteil 11 wirkende Moment am Werkzeugschutz 102 ab, der drehfest an dem Führungsrohr 6 montiert ist. Das beim Lösen auf den oberen Grundkörperteil 11 wirkende Moment muss nicht vom Benutzer gegengehalten werden. Der Benutzer hat die Möglichkeit, zum Lösen eines festsitzenden unteren Grundkörperteils 11 mit beiden Händen zu drehen.

## Patentansprüche

1. Schneidkopf auf einem Wellenende (2) einer Motorsense,
- wobei der Schneidkopf einen geteilten Grundkörper (90) aus einem oberen Grundkörperteil (11) und einem unteren Grundkörperteil (12) aufweist,
- wobei der Grundkörper (90) im Betrieb des Schneidkopfes (10) um eine Drehachse (19) drehend angetrieben ist,
- und das obere Grundkörperteil (11) mit dem Wellenende (2) drehfest verbunden ist,
- und in dem unteren Grundkörperteil (12) ein Schraubelement (37) drehfest gehalten ist, wobei das untere Grundkörperteil (12) auf das Wellenende (2) aufgeschraubt ist,
- und zwischen den Grundkörperteilen (11, 12) zumindest ein Schneidwerkzeug (13) angeordnet ist,
- wozu im Grundkörper (90) ein Lagerelement (70) angeordnet ist, das mit einem radialen Abstand (m) zur Drehachse (19) liegt,
- und das Schneidwerkzeug (13, 73) durch das Lagerelement (70) am Grundkörper (90) des Schneidkopfes (10) gehalten ist,
**dadurch gekennzeichnet,**
- **dass** das Lagerelement (70) in einem Grundkörperteil (12) fixiert ist,
- **dass** das Lagerelement (70) zumindest in Umfangsrichtung des Grundkörpers (90) gegenüber dem anderen Grundkörperteil (11) konstruktiv derart freigestellt ist, dass das auf dem Wellenende (2) montierte untere Grundkörperteil (12) zur Montage oder Demontage relativ zu dem oberen Grundkörperteil (11) drehbar ist,
- und zwischen dem oberen Grundkörperteil (11) und dem unteren Grundkörperteil (12) eine Kontaktfläche (60) ausgebildet ist, an der die Grundkörperteile (11, 12) bei an dem Wellenende (2) montiertem Gehäusekopf (90) aneinander anliegen,
- wobei die Kontaktfläche (60) radial näher an der Drehachse (19) liegt als das Lagerelement (70).

2. Schneidkopf nach Anspruch 1,
**dadurch gekennzeichnet, dass** durch die Schraubmontage des unteren Grundkörperteils (12) auf das Wellenende (2) einer Antriebswelle (3) der obere Grundkörperteil (11) axial an einem Drehmitnehmer (41) der Antriebswelle (3) gesichert ist.

3. Schneidkopf nach Anspruch 1,
**dadurch gekennzeichnet, dass** ein Verdrehen der Grundkörperteile (11, 12) zueinander ein Lösen des Schneidkopfes (10) von der Antriebswelle (3) bewirkt.

4. Schneidkopf nach Anspruch 1,
**dadurch gekennzeichnet, dass** das Schneidwerkzeug (13) sich bei einer Drehung des Grundkörpers (90) um die Drehachse (19) aufgrund wirkender Fliehkräfte radial nach außen ausrichtet und im Betrieb des Schneidkopfes (10) über den Umfang (20) des Grundkörpers vorsteht.

5. Schneidkopf nach Anspruch 1,
**dadurch gekennzeichnet, dass** das Lagerelement (70) für das Schneidwerkzeug (13, 73) in dem unteren Grundkörperteil (12) gehalten ist.

6. Schneidkopf nach Anspruch 1,
**dadurch gekennzeichnet, dass** das Lagerelement (70) mit einem axialen Abstand (a) zu einer axial benachbarten Innenfläche (42) des oberen Grundkörperteils (11) liegt.

7. Schneidkopf nach Anspruch 1,
**dadurch gekennzeichnet, dass** der obere Grundkörperteil (11) einen radial außerhalb des Lagerelementes (70) liegenden Außenrand (46) aufweist, der axial über die Innenfläche (42) des oberen Grundkörperteils (11) vorsteht.

8. Schneidkopf nach Anspruch 1,
**dadurch gekennzeichnet, dass** der axiale Abstand (a) des Lagerelementes (70) zur Innenfläche (42) des oberen Grundkörperteils (11) kleiner ist als die axiale Höhe (v) des Außenrandes (46).

9. Schneidkopf nach Anspruch 1,
**dadurch gekennzeichnet, dass** der Schraubweg des unteren Grundkörperteils (12) relativ zu dem oberen Grundkörperteil (11) durch einen zwischen den Grundkörperteilen (11, 12) liegenden Schraubanschlag (35) begrenzt ist.

10. Schneidkopf nach Anspruch 9,
**dadurch gekennzeichnet, dass** der Schraubanschlag (35) an einer Nabe (43) des oberen Grundkörperteils (11) ausgebildet ist.

11. Schneidkopf nach Anspruch 9,
**dadurch gekennzeichnet, dass** der Schraubanschlag (35) durch eine axiale Ringfläche (44) einer Nabe (43) des oberen Grundkörperteils (11) gebildet ist.

12. Schneidkopf nach Anspruch 9,
**dadurch gekennzeichnet, dass** der Schraubanschlag (35) ein zwischen dem oberen Grundkörperteil (11) und dem unteren Grundkörperteil (12) angeordnetes Einlegeteil (50) umfasst.

13. Schneidkopf nach Anspruch 12,
**dadurch gekennzeichnet, dass** das Einlegeteil (50) aus einem anderen Material als die Grundkörperteile (11, 12) besteht.

14. Schneidkopf nach Anspruch 9,
**dadurch gekennzeichnet, dass** dem Schraubanschlag (35) eine Stirnseite (34) eines an dem unteren Grundkörperteil (12) ausgebildeten Distanzelementes (33) zugeordnet ist.

15. Schneidkopf nach Anspruch 9,
**dadurch gekennzeichnet, dass** der Schraubanschlag (35) die Kontaktfläche (60) zwischen dem unteren Grundkörperteil (12) und dem oberen Grundkörperteil (11) bildet.

16. Schneidkopf nach Anspruch 9,
**dadurch gekennzeichnet, dass** der Schraubanschlag (35) eine radial äußerste Kontaktfläche (60) zwischen dem unteren Grundkörperteil (12) und dem oberen Grundkörperteil (11) bildet.

17. Schneidkopf nach Anspruch 1,
**dadurch gekennzeichnet, dass** ein Grundkörperteil (12) einen zentralen Zentrieransatz (31) aufweist, der in eine Zentrieraufnahme (32) des anderen Grundkörperteils (11) eingreift.

18. Schneidkopf nach Anspruch 17,
**dadurch gekennzeichnet, dass** der Zentrieransatz (12) über die Stirnseite (34) des Distanzelementes (33) vorsteht.

19. Schneidkopf nach Anspruch 1,
**dadurch gekennzeichnet, dass** das Schraubelement (37) eine in dem unteren Grundkörperteil (12) gehaltene Schraubmutter ist.

20. Schneidkopf nach Anspruch 1,
**dadurch gekennzeichnet, dass** das Lagerelement (70) ein Lagerbolzen (17) oder eine Lagerhülse (17') ist und das Schneidwerkzeug (13, 73) im Betrieb um eine Achse (18) des Lagerbolzens (17) oder der Lagerhülse (17') schwenkt.

21. Schneidkopf nach Anspruch 20,
**dadurch gekennzeichnet, dass** der Lagerbolzen (17) ein erstes Bolzenende (28) und ein zweites Bolzenende (29) aufweist, wobei das erste Bolzenende (28) in dem unteren Grundkörperteil (12) gehalten ist und das zweite Bolzenende (29) des Lagerbolzens (17) mit einem axialen Abstand (a) zu einer axial benachbarten Innenfläche (42) des oberen Grundkörperteils (11) liegt.

22. Schneidkopf nach Anspruch 1,
**dadurch gekennzeichnet, dass** das an einem Lagerelement (70) gehaltene Schneidwerkzeug (13, 73) mit seinem freien Ende (21) einen Schnittkreis (80) definiert, dessen Radius (R) mindestens das 3-fache des maximalen Radius (G) des Grundkörpers des Schneidkopfes (1) beträgt.

23. Schneidkopf nach Anspruch 1,
**dadurch gekennzeichnet, dass** das Summengewicht aller am Grundkörper gehaltenen Schneidwerkzeuge (13) mindestens 30% bis 40% des Gewichts des Grundkörperteils (12) beträgt, an dem die Schneidwerkzeuge (13) festgelegt sind.

## Claims

1. Cutting head on a shaft end (2) of a motor strimmer,
- wherein the cutting head comprises a divided main body (90) consisting of an upper main body component (11) and a lower main body component (12),
- wherein during the operation of the cutting head (10), the main body (90) is driven in rotation around a rotation axis (19),
- and the upper main body component (11) is attached rotationally fixed to the shaft end (2),
- and in the lower main body component (12) a screw element (37) is held rotationally fixed, so that the lower main body component (12) is screwed onto the shaft end (2),
- and between the main body components (11, 12) at least one cutting tool (13) is arranged,
- for which purpose, in the main body (90) there is arranged a bearing element (70), which is positioned a radial distance (m) away from the rotation axis (19),
- and the cutting tool (13, 73) is held on the main body (90) of the cutting head (10) by the bearing element (70),
**characterised in that**
- the bearing element (70) is fixed in a main body component (12),
- at least in the circumferential direction of the main body (90), relative to the other main body component (11), the bearing element (70) is of constructively free design such that for assembly or dismantling purposes the lower main body component (12) mounted on the shaft end (2) can be rotated relative to the upper main body component (11),
- and between the upper main body component (11) and the lower main body component (12) a contact surface (60) is formed, over which, when the housing head (90) is fitted onto the shaft end (2), the main body components (11, 12) rest against one another,
- wherein the contact surface (60) is radially closer to the rotation axis (19) than is the bearing element (70).

2. Cutting head according to claim 1,
**characterised in that** by virtue of the screwed fitting of the lower main body component (12) to the shaft end (2) of a driveshaft (3), the upper main body component (11) is secured axially onto a rotation driver (41) of the driveshaft (3).

3. Cutting head according to claim 1,
**characterised in that** a rotation of the main body components (11, 12) relative to one another releases the cutting head (10) from the driveshaft (3).

4. Cutting head according to claim 1,
**characterised in that** when the main body (90) rotates about the rotation axis (19), owing to the action of centrifugal forces the cutting tool (13) aligns itself radially outward and, during the operation of the cutting head (10), projects out beyond the circumference (20) of the main body.

5. Cutting head according to claim 1,
**characterised in that** the bearing element (70) for the cutting tool (13, 73) is held in the lower main body component (12).

6. Cutting head according to claim 1,
**characterised in that** the bearing element (70) is an axial distance (a) away from an axially adjacent inner surface (42) of the upper main body component (11).

7. Cutting head according to claim 1,
**characterised in that** the upper main body component (11) has an outer rim (46) located radially outside the bearing element (70), which extends axially over the inner surface (42) of the upper main body component (11).

8. Cutting head according to claim 1,
**characterised in that** the axial distance (a) between the bearing element (70) and the inner surface (42) of the upper main body component (11) is smaller than the axial height (v) of the outer rim (46).

9. Cutting head according to claim 1,
**characterised in that** the spiral path of the lower main body component (12) relative to the upper main body component (11) is limited by a screw stop (35) positioned between the main body components (11, 12).

10. Cutting head according to claim 9
**characterised in that** the screw stop (35) is formed on a hub (43) of the upper main body component (11).

11. Cutting head according to claim 9,
**characterised in that** the screw stop (35) is formed by an axial annular surface (44) of a hub (43) of the upper main body component (11).

12. Cutting head according to claim 9,
**characterised in that** the screw stop (35) comprises an insert (50) arranged between the upper main body component (11) and the lower main body component (12).

13. Cutting head according to claim 12,
**characterised in that** the insert (50) is made from a material different from the material of the main body components (11, 12).

14. Cutting head according to claim 9,
**characterised in that** an end face (34) of a spacer element (33) formed on the lower main body component (12) is associated with the screw stop (35).

15. Cutting head according to claim 9,
**characterised in that** the screw stop (35) forms the contact surface (60) between the lower main body component (12) and the upper main body component (11).

16. Cutting hear according to claim 9,
**characterised in that** the screw stop (35) forms a radially outermost contact surface (60) between the lower main body component (12) and the upper main body component (11).

17. Cutting head according to claim 1,
**characterised in that** one main body component (12) has a central centring spigot (31), which engages in a centring recess (32) of the other main body component (11).

18. Cutting head according to claim 17,
**characterised in that** the centring spigot (31) projects beyond the end face (34) of the spacer element (33).

19. Cutting head according to claim 1,
**characterised in that** the screw element (37) is a screw nut held in the lower main body component (12).

20. Cutting head according to claim 1,
**characterised in that** the bearing element (70) is a bearing bolt (17) or a bearing bush (17') and, during the operation the cutting tool (13, 73), it pivots about an axis (18) of the bearing bolt (17) or bearing bush (17').

21. Cutting head according to claim 20,
**characterised in that** the bearing bolt (17) has a first bolt end (28) and a second bolt end (29), such that the first bolt end (28) is held in the lower main body component (12) and the second bolt end (29) of the bearing bolt (17) is positioned an axial distance (a) away from an axially adjacent inner surface (42) of the upper main body component (11).

22. Cutting head according to claim 1,
**characterised in that** with its free end (21), the cutting tool (13, 73) held on a bearing element (70) defines a cutting circle (80) whose radius (R) is at least three times the maximum radius (G) of the main body of the cutting head (1).

23. Cutting head according to claim 1,
**characterised in that** the total weight of all the cutting tools (13) held on the main body is at least 30% to 40% of the weight of the main body component (12) on which the cutting tools (13) are fixed.

## Revendications

1. Tête de coupe sur une extrémité d'arbre (2) d'une débroussailleuse,
- dans laquelle la tête de coupe comporte un corps de base (90) divisé en une partie de corps de base supérieure (11) et une partie de corps de base inférieure (12),
- dans laquelle le corps de base (90) est entraîné en rotation autour d'un axe de rotation (19) lors du fonctionnement de la tête de coupe (10),
- et la partie de corps de base supérieure (11) est reliée de manière fixe en rotation à l'extrémité d'arbre (2),
- et dans la partie de corps de base inférieure (12), un élément à vis (37) est maintenu de manière fixe en rotation, dans laquelle la partie de corps de base inférieure (12) est vissée sur l'extrémité d'arbre (2),
- et au moins un outil de coupe (13) est disposé entre les parties de corps de base (11, 12),
- pour cela, est disposé dans le corps de base (90) un élément de support (70) qui à distance radiale (m) de l'axe de rotation (19),
- et l'outil de coupe (13, 73) est maintenu par l'élément se support (70) sur le corps de base (90) de la tête de coupe (10),
**caractérisée en ce**
- **que** l'élément de support (70) est fixé dans une partie de corps de base (12),
- **que** l'élément de support (70) est dégagé de par sa construction par rapport à l'autre partie de corps de base (11), au moins dans la direction circonférentielle du corps de base (90), de telle sorte que la partie de corps de base inférieure (12) montée sur l'extrémité d'arbre (2) soit apte à tourner par rapport à la partie de corps de base supérieure (11) pour le montage ou le démontage,
- et **qu'**entre la partie de corps de base supérieure (11) et la partie de corps de base inférieure (12) est formée une surface de contact (60) contre laquelle les parties de corps de base (11, 12) sont appliquées quand la tête de carter (90) est montée sur l'extrémité d'arbre (2),
- dans laquelle la surface de contact (60) est située radialement plus près de l'axe de rotation (19) que l'élément de support (70).

2. Tête de coupe selon la revendication 1,
**caractérisée en ce que** par un montage à vis de la partie de corps de base inférieure (12) sur l'extrémité d'arbre (2) d'un arbre d'entraînement (3), la partie de corps de base supérieure (11) est bloquée axialement contre un entraîneur en rotation (41) de l'arbre d'entraînement (3).

3. Tête de coupe selon la revendication 1,
**caractérisée en ce qu'**une torsion des parties de corps de base (11, 12) l'une par rapport à l'autre provoque un détachement de la tête de coupe (10) de l'arbre d'entraînement (3).

4. Tête de coupe selon la revendication 1,
**caractérisée en ce que** l'outil de coupe (13) s'oriente radialement vers l'extérieur en raison de forces centrifuges agissantes lors d'une rotation du corps de base (90) autour de l'axe de rotation (19) et dépasse de la circonférence (20) du corps de base lors du fonctionnement de la tête de coupe (10).

5. Tête de coupe selon la revendication 1,
**caractérisée en ce que** l'élément de support (70) pour l'outil de coupe (13, 73) est maintenu dans la partie de corps de base inférieure (12).

6. Tête de coupe selon la revendication 1,
**caractérisée en ce que** l'élément de support (70) à distance axiale (a) d'une surface intérieure axialement voisine (42) de la partie de corps de base supérieure (11).

7. Tête de coupe selon la revendication 1,
**caractérisée en ce que** la partie de corps de base supérieure (11) comporte un bord extérieur (46) situé radialement à l'extérieur de l'élément de support (70) qui dépasse axialement de la surface intérieure (42) de la partie de corps de base supérieure (11).

8. Tête de coupe selon la revendication 1,
**caractérisée en ce que** la distance axiale (a) de l'élément de support (70) à la surface intérieure (42) de la partie de corps de base supérieure (11) est plus petit que la hauteur axiale (v) du bord extérieur (46).

9. Tête de coupe selon la revendication 1,
**caractérisée en ce que** la course de vis de la partie de corps de base inférieure (12) par rapport à la partie de corps de base supérieure (11) est limitée par une butée de vis (35) située entre les parties de corps de base (11, 12).

10. Tête de coupe selon la revendication 9,
**caractérisée en ce que** la butée de vis (35) est formée sur un moyeu (43) de la partie de corps de base supérieure (11).

11. Tête de coupe selon la revendication 9,
**caractérisée en ce que** la butée de vis (35) est formée par une surface annulaire axiale (44) d'un moyeu (43) de la partie de corps de base supérieure (11).

12. Tête de coupe selon la revendication 9,
**caractérisée en ce que** la butée de vis (35) comprend un élément d'insertion (50) disposé entre la partie de corps de base supérieure (11) et la partie de corps de base inférieure (12).

13. Tête de coupe selon la revendication 12,
**caractérisée en ce que** l'élément d'insertion (50) est constitué d'un matériau autre que les parties de corps de base (11, 12).

14. Tête de coupe selon la revendication 9,
**caractérisée en ce qu'**à la butée de vis (35) est associé un côté frontal (34) d'un élément d'espacement (33) formé sur la partie de corps de base inférieure (12).

15. Tête de coupe selon la revendication 9,
**caractérisée en ce que** la butée de vis (35) forme la surface de contact (60) entre la partie de corps de base inférieure (12) et la partie de corps de base supérieure (11).

16. Tête de coupe selon la revendication 9,
**caractérisée en ce que** la butée de vis (35) forme une surface de contact (60) radialement la plus à l'extérieur entre la partie de corps de base inférieure (12) et la partie de corps de base supérieure (11).

17. Tête de coupe selon la revendication 1,
**caractérisée en ce qu'**une partie de corps de base (12) comporte une saillie de centrage centrale (31) qui vient en prise dans un logement de centrage (32) de l'autre partie de corps de base (11).

18. Tête de coupe selon la revendication 17,
**caractérisée en ce que** la saillie de centrage (31) dépasse du côté frontal (34) de l'élément d'espacement (33).

19. Tête de coupe selon la revendication 1,
**caractérisée en ce que** l'élément à vis (37) est un écrou maintenu dans la partie de corps de base inférieure (12).

20. Tête de coupe selon la revendication 1,
**caractérisée en ce que** l'élément de support (70) est un palier de support (17) ou un manchon de support (17') et l'outil de coupe (13, 73), en fonctionnement, pivote autour d'un axe (18) du palier de support (17) ou du manchon de support (17').

21. Tête de coupe selon la revendication 20,
**caractérisée en ce que** le palier de support (17) comporte une première extrémité de palier (28) et une deuxième extrémité de palier (29), dans laquelle la première extrémité de palier (28) est maintenue dans la partie de corps de base inférieure (12) et la deuxième extrémité de palier (29) se trouve à distance axiale (a) d'une surface intérieure axialement voisine (42) de la partie de corps de base supérieure (11).

22. Tête de coupe selon la revendication 1,
**caractérisée en ce que** l'outil de coupe (13, 73) maintenu sur un élément de support (70) définit avec son extrémité libre (21) un cercle de coupe (80) dont le rayon (R) est égal à au moins 3 fois le rayon maximal (G) du corps de base de la tête de coupe (1).

23. Tête de coupe selon la revendication 1,
**caractérisée en ce que** le poids total de tous les outils de coupe (13) maintenus sur le corps de base représente au moins 30% à 40% du poids de la partie de corps de base (12) à laquelle les outils de coupe (13) sont fixés.
